# EUROPEAN PATENT APPLICATION

(11) **EP 4 657 041 A1**
(43) Date of publication of application: **03.12.2025**
(21) Application number: 24901036.4
(22) Date of filing: 03.12.2024
(51) Int. Cl.: G01N 1/28, G01N 3/24, H01M 10/42

(54) **JIG FOR MANUFACTURING TEST PIECE AND METHOD FOR MANUFACTURING TEST PIECE USING SAME**

(30) Priority: 05.12.2023 KR 20230174940; 02.12.2024 KR 20240176431
(71) Applicant: LG Energy Solution, Ltd., Seoul 07335 (KR)
(72) Inventor: KIM, Min Hyeok, Daejeon 34122 (KR)
(74) Representative: Goddar, Heinz J.
(86) International application number: PCT/KR2024/019624
(87) International publication number: WO 2025/121850

(57) **Abstract**

Disclosed are a jig for manufacturing specimen that checks the shear force of a thermally conductive resin injected between a battery cell stack accommodated in a battery pack and a top plate added so as to cover an upper part of the battery cell stack, the jig including a jig body including an upper end portion disposed so as to be perpendicular to a longitudinal direction of a test piece and a first lower end portion and a second lower end portion extending downward from both ends of the upper end portion, respectively, wherein the first lower end portion and the second lower end portion are spaced apart from each other such that the distance therebetween is greater than the width of the test piece, and a specimen manufacturing method using the same.

## Description

### [Technical Field]

This application claims the benefit of priority to Korean Patent Application No. 2023-0174940 filed on December 5, 2023 and Korean Patent Application No. 2024-0176431 filed on December 2, 2024, the disclosure of which is incorporated herein by reference in its entirety.

The present invention relates to a jig for manufacturing specimen and a specimen manufacturing method using the same. More particularly, a thermally conductive resin is injected into a battery pack including a plurality of battery cells in order to increase heat dissipation of the plurality of battery cells, and the present invention relates to a jig for manufacturing specimen capable of observing the shear force bewteen the plurality of battery cells and a top plate bonded via the thermally conductive resin and a specimen manufacturing method using the same.

### [Background Art]

A secondary battery, which is capable of being charged and discharged, has been widely used as an energy source for wireless mobile devices. In addition, the secondary battery and has also attracted attention as a power source for electric vehicles (EV), hybrid electric vehicles (HEV), and plug-in hybrid electric vehicles (PHEV) proposed as a solution to air pollution caused by existing gasoline and diesel vehicles, which use fossil fuels.

Small mobile devices require a low operating voltage to operate a single device, whereas medium and large devices, such as automobiles, require a high-power, large-capacity energy source. Accordingly, a medium and large battery module or battery pack including a plurality of battery cells electrically connected to each other is used.

Secondary batteries, which are capable of being charged and discharged, are used as the battery cells constituting the medium and large battery module or battery pack, and the more high-power/large-capacity the secondary batteries are, the more heat the secondary batteries generate during a charging and discharging process. If the heat generated during the charging and discharging process is not effectively removed, a deterioration phenomenon is accelerated, and ignition or explosion may be caused in some cases.

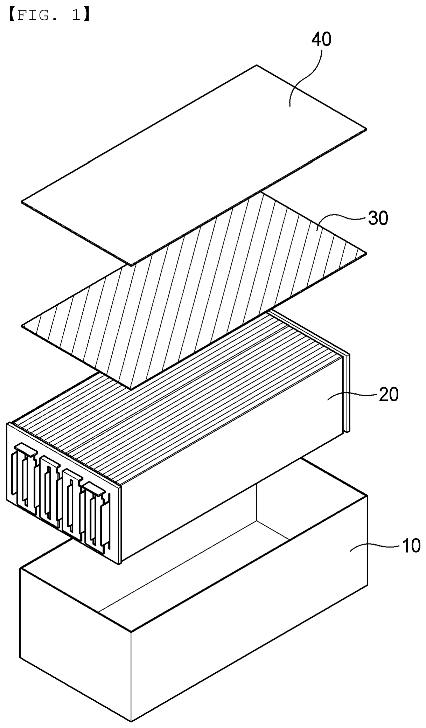

FIG. 1 is an exploded perspective view of a general battery pack.

Referring to FIG. 1, in the general battery pack, a battery cell stack 20 including a plurality of stacked battery cells is received in a battery pack housing 10, and a top plate 40 is added to an open upper surface of the battery pack housing 10. A thermally conductive resin 30 is provided in the space defined between the top plate 40 and the battery cell stack 20 to completely fill the space.

Conventionally, a method of removing heat from the battery cell stack 20 by filling the space between the battery cell stack 20 and the top plate 40 with the thermally conductive resin 30 is used, and it is necessary to determine the amount of the thermally conductive resin 30 to be applied or appropriately set the type, amount of application, and thickness of the thermally conductive resin by measuring the shear force between the battery cell stack 20 and the top plate 40 coupled to each other in the state in which the thermally conductive resin 30 is interposed between the battery cell stack 20 and the top plate 40.

However, there is no experimental method capable of observing the shear force between the battery cell and the top plate in the state in which the battery cell and the thermally conductive resin are coupled to each other.

Conventionally, therefore, samples that replace a battery case of the battery cell and the top plate are attached to each other via the thermally conductive resin to manufacture a specimen for shear force testing, and the shear force is checked using the same.

However, it is difficult to uniformly apply the thermal conductive resin, and therefore it is difficult to control the application area and thickness of the thermal conductive resin.

Therefore, there is a need for a jig for specimen capable of manufacturing a plurality of test pieces having a thermal conductive resin applied thereto in a constant amount and with a constant thickness and a specimen manufacturing method using the same.

### [Disclosure]

### [Technical Problem]

The present invention has been made in view of the above problems, and it is an object of the present invention to provide a jig for manufacturing specimen capable of manufacturing standardized specimens by equalizing the amount of application, area, and thickness of a thermally conductive resin and a specimen manufacturing method using the same.

### [Technical Solution]

A jig for manufacturing specimen according to the present invention to accomplish the above object, which is a jig for manufacturing specimen that checks shear force between a thermally conductive resin injected between a battery cell stack accommodated in a battery pack and a top plate added so as to cover an upper part of the battery cell stack, includes a jig body including an upper end portion disposed perpendicular to a longitudinal direction of a test piece and a first lower end portion and a second lower end portion extending downward from both ends of the upper end portion, respectively, wherein the first lower end portion and the second lower end portion are spaced apart from each other such that the distance therebetween is greater than the width of the test piece.

The jig body may have a thickness (D) of 1 to 5 mm.

The jig body may include an integrated structure in which the upper end portion, the first lower end portion, and the second lower end portion are connected to each other.

The jig may further include a base jig that allows the jig body to be disposed thereon, wherein at least one of the upper end portion, the first lower end portion, and the second lower end portion may be fixed to the base jig.

One end of at least one of the upper end portion, the first lower end portion, and the second lower end portion may be rotatably fixed to the base jig using a turning member.

The base jig may mark a position at which the test piece is disposed.

A fixing member that fixes the test piece may be mounted to the base jig.

In addition, the present invention provides a specimen manufacturing method using the jig, the specimen manufacturing method including a first step of fixing a test piece, a second step of disposing a jig for manufacturing specimen that includes an upper end portion disposed to be perpendicular to a longitudinal direction of the test piece, a third step of adding a thermally conductive resin to the test piece located between a first lower end portion and a second lower end portion, a fourth step of removing the thermally conductive resin attached to upper surfaces of the upper end portion, the first lower end portion, and the second lower end portion among the thermally conductive resin added in the third step, a fifth step of attaching a metal plate to the thermally conductive resin of the fourth step, and a sixth step of removing the jig for manufacturing specimen .

The first step may be a process of fixing the test piece using a tape.

The third step may include adding the thermally conductive resin in a greater amount than the space defined between the upper end portion, the first lower end portion, and the second lower end portion.

The test piece may be disposed at a test piece position indicator marked on the base jig, and the test piece may be fixed by a fixing member attached to the base jig.

A part of the jig body including the upper end portion, the first lower end portion, and the second lower end portion may include a fixing portion fixed to the base jig, and the jig body may rotate using the fixing portion as the axis of rotation.

The test piece may be disposed under the base jig in the state in which the jig body is rotated in a first direction such that the angle between the jig body and the base jig increases, and the jig body is rotated in a second direction opposite the first direction such that the angle between the jig body and the base jig is zero, wherein the test piece may be disposed under the upper end portion of the jig body.

The fifth step may include a process of pressing the metal plate and a process of drying the thermally conductive resin.

In addition, the present invention may provide various combinations of the above solving means.

### [Advantageous Effects]

As is apparent from the above description, a jig for manufacturing specimen according to the present invention and a specimen manufacturing method using the same are capable of manufacturing a specimen with a constant application amount, area, and thickness of a thermally conductive resin.

### [Description of Drawings]

FIG. 1 is an exploded perspective view of a general battery pack.
FIG. 2 is a plan view of a jig for manufacturing specimen according to a first embodiment.
FIG. 3 is a perspective view of FIG. 2.
FIG. 4 is a plan view of a jig for manufacturing specimen according to a second embodiment.
FIG. 5 is a plan view of a jig for manufacturing specimen according to a third embodiment.
FIG. 6 shows the sequence of a specimen manufacturing method using the jig for manufacturing specimen according to the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

The same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

A description to embody elements through limitation or addition may be applied to all inventions, unless particularly restricted, and does not limit a specific invention.

In the description of the invention and the claims of the present application, singular forms are intended to include plural forms unless mentioned otherwise.

In the description of the invention and the claims of the present application, "or" includes "and" unless mentioned otherwise. Therefore, "including A or B" means three cases, namely, the case including A, the case including B, and the case including A and B.

Embodiments of the present invention will be described in detail with reference to the drawings.

A jig for manufacturing specimen according to the present invention is configured to manufacture a specimen for checking the shear force between battery cells constituting a battery cell stack and a thermally conductive resin when a battery pack is manufactured by receiving the battery cell stack in a battery pack housing, coupling a top plate to the battery pack housing so as to cover an upper surface of the battery pack housing, and injecting the thermally conductive resin between the battery cell stack and the top plate.

Specifically, the battery cell stack may be configured such that a plurality of pouch-shaped battery cells is disposed in tight contact with each other, wherein the bottom of a cup portion of each of the pouch-shaped battery cells may be disposed so as to stand perpendicular to the bottom of the pack housing, the thermally conductive resin may be injected above the battery cell stack so as to cover an upper part of the battery cell stack, and the top plate may be disposed on the thermally conductive resin to seal the pack housing.

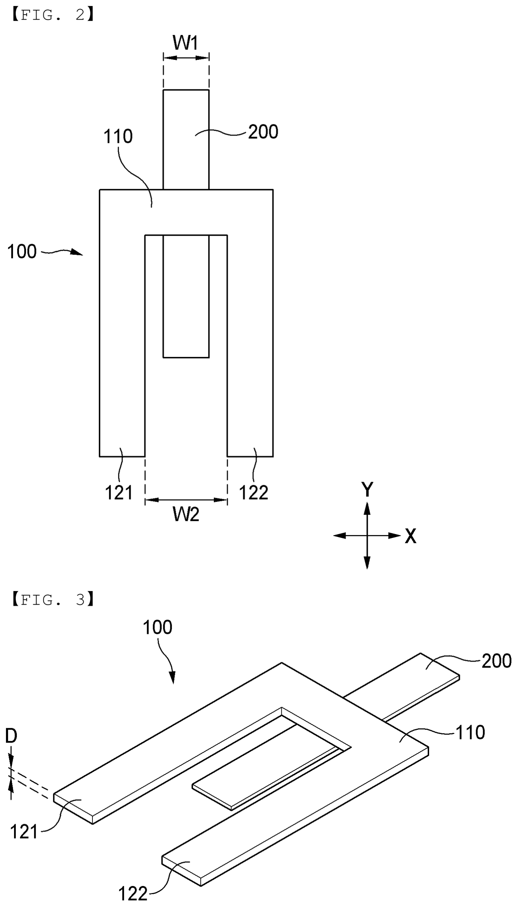

FIG. 2 is a plan view of a jig for manufacturing specimen according to a first embodiment, and FIG. 3 is a perspective view of FIG. 2.

Referring to FIGs. 2 and 3, the jig for manufacturing specimen according to the present invention includes a jig body 100 constituted by an upper end portion 110 disposed so as to be perpendicular to a longitudinal direction (Y) of a test piece 200 and a first lower end portion 121 and a second lower end portion 122 extending downward from both ends of the upper end portion 110, respectively.

That is, the jig body 100 is configured to have an integrated structure in which the upper end portion 110, the first lower end portion 121, and the second lower end portion 122 are connected to each other, and may have an approximately "[" shape.

A specimen manufactured using the jig for manufacturing specimen may be a sample that replaces each of a pouch-shaped battery cell, a top plate, and a thermally conductive resin, wherein the sample for the pouch-shaped battery cell may be a test piece made of a laminate sheet, the sample for the top plate may be a metal plate, and the sample for the thermally conductive resin may be a thermally conductive resin added to attach the test piece and the metal plate.

The specimen manufactured using the jig for manufacturing specimen is a test specimen for checking the shear force between the pouch-shaped battery cell when the top plate and the pouch-shaped battery cell are attached to each other via the thermally conductive resin.

The same sheet as a laminate sheet for a battery case of the pouch-shaped battery cell may be used as the test piece described in the present invention. Consequently, the test piece may include an outer resin layer, a metal layer, and an inner adhesive layer, and may further include an adhesive layer between the outer resin layer and the metal layer and between the metal layer and the inner adhesive layer.

A known laminate sheet for pouch-shaped battery cases may be used as the laminate sheet without restriction, and therefore a description of the specific configuration of the laminate sheet will be omitted.

The thermally conductive resin may be the same as a thermally conductive resin added to the space between the battery cell stack and the top plate in the battery pack. For example, the thermally conductive resin may be a polymer material such as epoxy, polyimide, or polystyrene, or a polymer composite material including metal particles such as Al, Ag, Cu, or Ni, ceramic particles such as AlN, Al₂O₃, BN, SiC, or BeO, or a carbon-based filler such as graphite, carbon nanotubes, carbon fibers, or graphene in addition to the polymer material.

The metal plate may be made of the same material as the top plate, and may include, for example, aluminum.

It must be ensured that the test piece 200 is visible between the first lower end portion 121 and the second lower end portion 122 in order to add the thermal conductive resin 300 to the entirety of one surface of one end of the test piece 200. To this end, the first lower end portion 121 and the second lower end portion 122 are located spaced apart from each other such that the distance W2 between the first lower end portion and the second lower end portion is greater than the width W1 of the test piece.

The thermally conductive resin is added to the space formed inside the upper end portion 110, the first lower end portion 121, and the second lower end portion 122, and the thickness of the jig body 100 may be formed so as to correspond to a desired thickness of the thermally conductive resin.

For example, the thickness D of the jig body may be 1 to 5 mm. If the thickness of the jig body is less than 1 mm, it may be difficult to secure sufficient adhesion between the test piece 200 and the thermally conductive resin 300, which may cause problems in manufacture of the specimen. If the thickness of the jig body is greater than 5 mm, the thermally conductive resin 300 may be manufactured too thick, whereby it may be problematic to fix the test piece having the thermally conductive resin added thereto to a UTM gripper for tensile testing, which is undesirable.

In a specific example, the area of the test piece to which the thermally conductive resin is attached may be uniform such that a shear force measurement test using a plurality of test pieces can be performed under uniform conditions. In order to increase the reliability of the test results, the jig for manufacturing specimen according to the present invention may be configured such that the position of the thermally conductive resin added to the test piece is constant, thereby ensuring that the area of the test piece to which the thermally conductive resin is added is uniform. That is, the test piece may be configured to be located at a specific position of a lower part of the jig body.

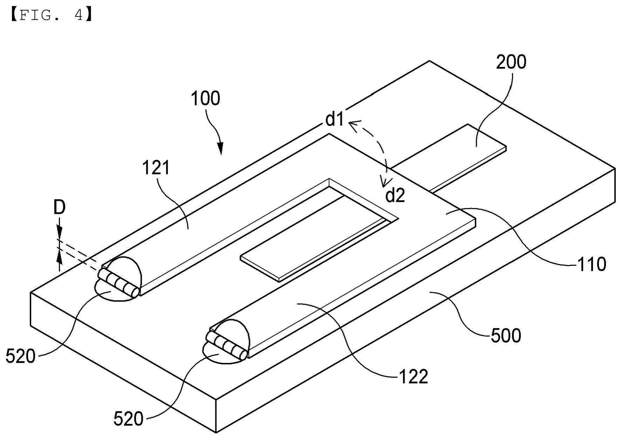

FIG. 4 is a plan view of a jig for manufacturing specimen according to a second embodiment.

Referring to FIG. 4, the jig for manufacturing specimen according to the second embodiment may further include a base jig 500 configured to allow a jig body 100 to be disposed thereon, wherein a part of the jig body 100 including an upper end portion 110, a first lower end portion 121, and a second lower end portion 122 may include a fixing portion fixed to the base jig 500, and at least one of the upper end portion 110, the first lower end portion 121, and the second lower end portion 122 may be fixed to the base jig 500. Specifically, one end of at least one of the upper end portion 110, the first lower end portion 121, and the second lower end portion 122 may rotate using the fixing portion as the axis of rotation. For example, first ends of the first lower end portion 121 and the second lower end portion 122 may be coupled to the upper end portion 110, and second ends of the first lower end portion and the second lower end portion, which are not coupled to the upper end portion 110, may include fixing portions fixed to the base jig, and each of the fixing portions may be constituted by a turning member 520 such as a hinge.

As such, the jig body 100 may be fixed to the base jig 500 so as to be rotatable using the turning member 520, and the angle formed by a lower surface of the jig body 100 and an upper surface of the base jig 500 may be 0 to 180 degrees.

In FIG. 4, the turning member 520 is added to one end of each of the first lower end portion 121 and the second lower end portion 122 such that the first lower end portion 121 and the second lower end portion 122 are fixed to the base jig 500.

The test piece 200 may be disposed under the base jig 500 in the state in which the jig body 100 is rotated in a first direction d1 such that the angle between the jig body 100 and the base body 500 increases, and the jig body may be rotated in a second direction d2, which is opposite the first direction d1, such that the angle between the jig body and the base body 500 is zero, whereby the test piece 200 may be located under the upper end portion 110 of the jig body 100.

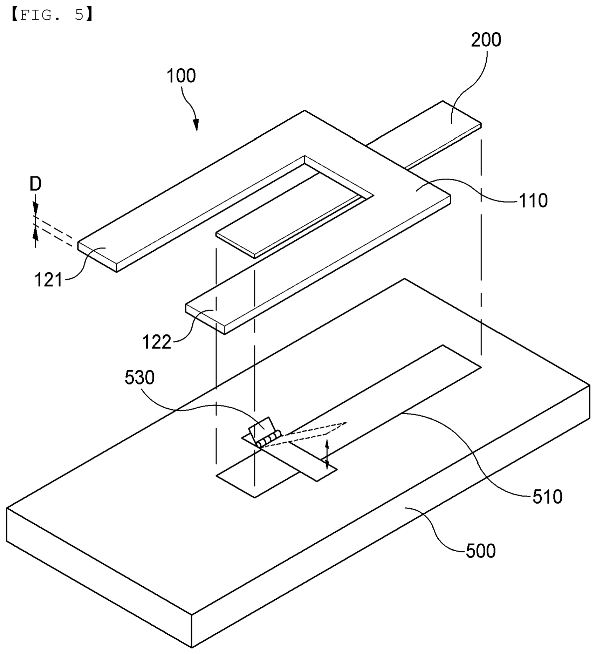

FIG. 5 is a plan view of a jig for manufacturing specimen according to a third embodiment.

Referring to FIG. 5, a test piece position indicator 510 configured to indicate the position at which a test piece 200 is disposed may be marked on a base jig 500 such that a thermally conductive resin can be added to a specific position of an outer surface of the test piece 200, and the test piece 200 may be disposed at the test piece position indicator 510 marked on the base jig 500. Consequently, the thermally conductive resin may be added to the test piece disposed at the specific position so as to have a specific area and thickness, whereby the thermally conductive resin having the specific area and thickness may be added to the specific position of the outer surface of the test piece.

In addition, a fixing member configured to fix the test piece 200 may be mounted to the base jig 500. For example, the test piece 200 may be fixed to the base jig via a tape, or may be fixed to the base jig via a fixing member such as a gripper 530 shown in FIG. 5.

When the thermally conductive resin is added in the state in which the test piece 200 is disposed at the test piece position indicator 510 marked on the base jig 500, as described above, it is possible to manufacture all specimens using the jig for manufacturing specimen so as to have the same shape.

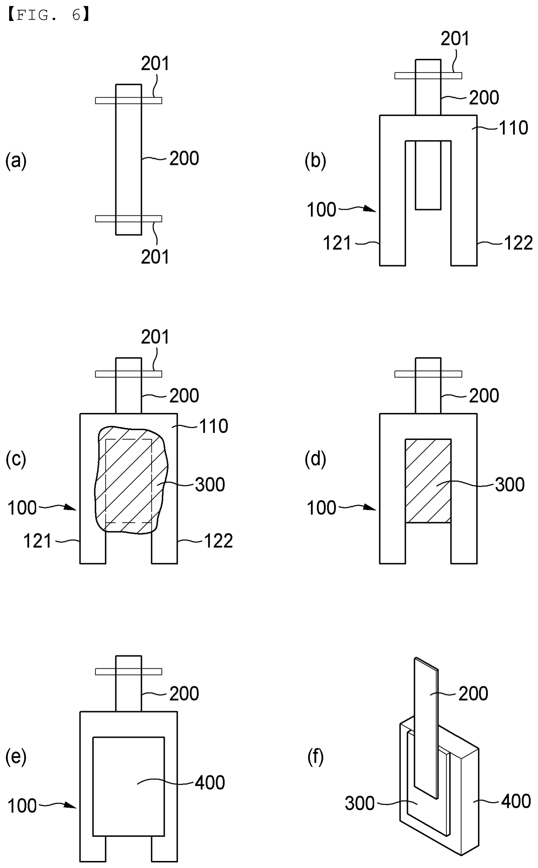

FIG. 6 shows the sequence of a specimen manufacturing method using the jig for manufacturing specimen according to the present invention.

Referring to FIG. 6, the specimen manufacturing method according to the present invention includes a first step of fixing a test piece 200, a second step of disposing a jig for manufacturing specimen such that an upper end portion 110 is perpendicular to a longitudinal direction of the test piece 200, a third step of adding a thermally conductive resin 300 to the test piece 200 located between a first lower end portion 121 and a second lower end portion 122, a fourth step of removing the thermally conductive resin 300 attached to upper surfaces of the upper end portion 110, the first lower end portion 121, and the second lower end portion 122 among the thermally conductive resin 300 added in the third step, a fifth step of attaching a metal plate 400 to the thermally conductive resin 300 of the fourth step, and a sixth step of removing the jig for manufacturing specimen.

The first step may be a process of fixing the test piece 200 using a tape 201. As shown in (a) of FIG. 6, the tape 201 may be attached to each of an upper end and a lower end of the test piece 200, but before the thermally conductive resin 300 is added, the test piece 201 attached to the lower end, which is the position where the thermally conductive resin 300 is added, may be removed in advance, as shown in (b) of FIG. 6.

In the third step, the thermally conductive resin 300 may be added in a greater amount than the space defined between the upper end portion 110, the first lower end portion 121, and the second lower end portion 122 in order to completely fill the space. In the fourth step, therefore, the excess thermally conductive resin 300 remaining after filling the space, i.e. the thermally conductive resin attached to upper surfaces of the upper end portion 110, the first lower end portion 121, and the second lower end portion 122, is removed.

Meanwhile, in the jig for manufacturing specimen according to each of the first to third embodiments, the jig body 100 may be configured in the form of a rectangular frame in which lower ends of the first lower end portion 121 and the second lower end portion 122, which are opposite upper ends of the first lower end portion and the second lower end portion connected to the upper end portion 110, are open while the lower ends are closed. In this case, the area to which the thermally conductive resin 300 is applied may be uniformly configured as the area of the space formed in the rectangular frame.

The fifth step includes a process of pressing the metal plate and a process of drying the thermally conductive resin.

In the present invention, the thermally conductive resin may be added to the extent of the space formed in the jig body, and therefore the thermally conductive resin may be added so as to have a uniform thickness even if there is a deviation in the force applied to press the metal plate.

Hereinafter, the present invention will be described with reference to the following example. However, the example is provided only for easier understanding of the present invention and should not be construed as limiting the scope of the present invention.

### <Example>

A specimen for conducting a shear force measurement test according to the standard specification ASTM D1002 was manufactured.

A test piece was prepared by cutting a laminate sheet having a thickness of 2 mm and used as a pouch-shaped battery case so as to have a width of 25.4 mm and a length of 101.6 mm, and a thermally conductive resin was added to the test piece using a jig for manufacturing specimen according to the present invention. The thermally conductive resin was added to the test piece so as to have a width of 25.4 mm, a length of 25.4 mm, and a thickness of 2 mm, a metal plate was attached to the thermally conductive resin, and hardening was performed at 25°C for 24 hours or more.

The metal plate was coupled to a lower jig of a UTM, the test piece was fixed to an upper jig, and the force when the test piece was separated from the metal plate was measured while pulling the metal plate and the test piece in opposite directions.

The shear force was measured to be 1.4 MPa or more.

As such, when the jig for manufacturing specimen according to the present invention is used, the thermally conductive resin may be added to the test specimen so as to have a uniform size and thickness, whereby it is possible to appropriately set the type, amount of application, and thickness of the thermally conductive resin by measuring the shear force between a battery cell stack and a top plate without disassembling a battery pack.

In a battery pack in which a space above a battery cell stack received in a battery pack housing is filled with a thermally conductive resin, a top plate is added, and sealing is performed, if it is necessary to control the shear force between the battery cell stack and the top plate so as to be 1.4 MPa or higher, when the specimen is prepared using the jig for manufacturing specimen and is tested, as in the above example, it is possible to obtain accurate results in a simple manner without disassembling the battery pack.

Those skilled in the art to which the present invention pertains will appreciate that various applications and modifications are possible within the category of the present invention based on the above description.

### (Description of Reference Symbols)

10: Battery pack housing
20: Battery cell stack
30, 300: Thermally conductive resins
40: Top plate
100: Jig body
110: Upper end portion
121: First lower end portion
122: Second lower end portion
200: Test piece
201: Tape
400: Metal plate
500: Base jig
510: Test piece position indicator
520: Turning member
530: Gripper
D: Thickness of jig body
W1: Width of test piece
W2: Distance between first lower end portion and second lower end portion

## Claims

1. A jig for manufacturing specimen that checks shear force of a thermally conductive resin injected between a battery cell stack accommodated in a battery pack and a top plate added so as to cover an upper part of the battery cell stack, the jig comprising a jig body including:
an upper end portion disposed perpendicular to a longitudinal direction of a test piece; and
a first lower end portion and a second lower end portion extending downward from both ends of the upper end portion, respectively, wherein
the first lower end portion and the second lower end portion are spaced apart from each other such that a distance therebetween is greater than a width of the test piece.

2. The jig according to claim 1, wherein the jig body has a thickness of 1 to 5 mm.

3. The jig according to claim 1, wherein the jig body includes an integrated structure in which the upper end portion, the first lower end portion, and the second lower end portion are connected to each other.

4. The jig according to claim 1, further comprising:
a base jig that allows the jig body to be disposed thereon, wherein
at least one of the upper end portion, the first lower end portion, and the second lower end portion is fixed to the base jig.

5. The jig according to claim 4, wherein one end of at least one of the upper end portion, the first lower end portion, and the second lower end portion is rotatably fixed to the base jig using a turning member.

6. The jig according to claim 4, wherein the base jig marks a position at which the test piece is disposed.

7. The jig according to claim 4, wherein a fixing member that fixes the test piece is mounted to the base jig.

8. A specimen manufacturing method using the jig according to any one of claims 1 to 7, the specimen manufacturing method including:
a first step of fixing a test piece;
a second step of disposing a jig for manufacturing specimen that includes an upper end portion disposed to be perpendicular to a longitudinal direction of the test piece;
a third step of adding a thermally conductive resin to the test piece located between a first lower end portion and a second lower end portion;
a fourth step of removing the thermally conductive resin attached to upper surfaces of the upper end portion, the first lower end portion, and the second lower end portion among the thermally conductive resin added in the third step;
a fifth step of attaching a metal plate to the thermally conductive resin of the fourth step; and
a sixth step of removing the jig for manufacturing specimen.

9. The specimen manufacturing method according to claim 8, wherein the first step is a process of fixing the test piece using a tape.

10. The specimen manufacturing method according to claim 8, wherein, the third step includes adding the thermally conductive resin in a greater amount than a space defined between the upper end portion, the first lower end portion, and the second lower end portion.

11. The specimen manufacturing method according to claim 8, wherein
the test piece is disposed at a test piece position indicator marked on the base jig, and
the test piece is fixed by a fixing member attached to the base jig.

12. The specimen manufacturing method according to claim 11, wherein
a part of the jig body comprising the upper end portion, the first lower end portion, and the second lower end portion comprises a fixing portion fixed to the base jig, and
the jig body rotates using the fixing portion as an axis of rotation.

13. The specimen manufacturing method according to claim 12, wherein the test piece is disposed under the base jig in a state in which the jig body is rotated in a first direction such that an angle between the jig body and the base jig increases, and the jig body is rotated in a second direction opposite the first direction such that the angle between the jig body and the base jig is zero, wherein the test piece is disposed under the upper end portion of the jig body.

14. The specimen manufacturing method according to claim 8, wherein the fifth step includes a process of pressing the metal plate and a process of drying the thermally conductive resin.
